# FASCICULE DE BREVET EUROPEEN

(11) **EP 2 788 221 B1**
(45) Date de publication et mention de la délivrance du brevet: **14.03.2018**
(21) Numéro de dépôt: 12794270.4
(22) Date de dépôt: 22.11.2012
(51) Int. Cl.: B60L 15/20, B60W 10/26, B60L 11/18, B60L 1/00, B60L 11/14, H02J 7/14, H02J 7/16, B60L 11/00

(54) **PROCEDE DE GESTION D'UN ALTERNATEUR ASSOCIE A AU MOINS UNE BATTERIE D'ALIMENTATION ET ENTRAINE PAR UN MOTEUR THERMIQUE**
VERFAHREN ZUR VERWALTUNG EINES ALTERNATORS, DER MIT MINDESTENS EINER HOCHLEISTUNGSBATTERIE KOMBINIERT, UND VON EINER WÄRMEKRAFTMASCHINE BETRIEBEN IST
METHOD FOR MANAGING AN ALTERNATOR COMBINED WITH AT LEAST ONE POWER BATTERY AND DRIVEN BY A HEAT ENGINE

(30) Priorité: 06.12.2011 FR 1161220
(43) Date de publication de la demande: 15.10.2014
(73) Titulaire: Renault S.A.S., 92100 Boulogne-Billancourt (FR)
(72) Inventeur: SAINT-LEGER, Gérard, F-78000 Versailles (FR); DEMURE, Sophie, F-92160 Antony (FR)
(86) Numéro de dépôt international: PCT/EP2012/073307
(87) Numéro de publication internationale: WO 2013/083409

(56) Documents cités:
- EP-A2- 1 454 786
- WO-A1-01/52382
- FR-A1- 2 851 516
- US-A1- 2006 232 238
- US-A1- 2011 001 352
- VOLKAN SEZER ET AL: "A Novel ECMS and Combined Cost Map Approach for High-Efficiency Series Hybrid Electric Vehicles", IEEE TRANSACTIONS ON VEHICULAR TECHNOLOGY, IEEE SERVICE CENTER, PISCATAWAY, NJ, US, vol. 60, no. 8, octobre 2011 (2011-10), pages 3557-3570, XP011362933, ISSN: 0018-9545, DOI: 10.1109/TVT.2011.2166981
- SUNIL ADHIKARI ET AL: "An Online Power-Balancing Strategy for a Parallel Hybrid Electric Vehicle Assisted by an Integrated Starter Generator", IEEE TRANSACTIONS ON VEHICULAR TECHNOLOGY, IEEE SERVICE CENTER, PISCATAWAY, NJ, US, vol. 59, no. 6, juillet 2010 (2010-07), pages 2689-2699, XP011310216, ISSN: 0018-9545

## Description

L'invention se rapporte aux systèmes d'alimentation électrique de véhicules automobiles à propulsion par un moteur thermique ou à propulsion hybride thermique-électrique, et notamment aux systèmes d'alimentation électrique comprenant plusieurs batteries de types différents.

On peut en effet souhaiter utiliser différents types de batteries en parallèle afin de tirer parti par exemple de la bonne capacité d'une batterie au plomb à fournir de l'énergie pour un démarrage à froid, et de la forte énergie spécifique ainsi que de la plus grande endurance en terme de cycles de charge et de décharge d'une batterie de type lithium-ion.

La demande de brevet US 2011 00 1352 décrit ainsi un système où les deux types de batteries sont présentes, les tensions à vide et les résistances internes des deux batteries étant choisies de manière à ce que, pour une tension d'alternateur constante, ce soit de manière préférentielle la batterie au lithium qui se décharge puis se recharge, la batterie au plomb subissant ainsi un moindre nombre de cycles de charge et de décharge.

L'utilisation de la batterie au plomb est alors réservée de manière préférentielle aux phases de démarrage du véhicule.

Pour permettre d'obtenir une telle configuration, la tension maximale à vide de la batterie au lithium doit rester relativement proche de la tension maximale à vide de la batterie au plomb. La capacité énergétique maximale de la batterie au lithium s'en trouve donc limitée.

Un tel système permet d'augmenter la durée de vie de la batterie au plomb, mais oblige à limiter les performances des batteries au lithium utilisées. En outre, la tension constante de l'alternateur doit être choisie suffisamment élevée pour permettre de recharger simultanément la batterie au plomb et la batterie au lithium, ce qui induit une surconsommation de carburant par rapport à un système muni uniquement d'une batterie au plomb.

La demande de brevet WO 01/52382 permet de mettre en marche ou de désactiver un alternateur en fonction de l'état de charge d'une batterie ou d'un groupe de batteries d'un véhicule, ainsi que d'un type de roulage d'un véhicule. On évite ainsi une surconsommation de carburant pendant les périodes où la batterie est déjà suffisamment chargée, ou pendant les périodes où le rendement du moteur est peu favorable.

La demande EP1454786 décrit un véhicule hybride à deux batteries, dans lequel le chargement de la batterie haute tension du véhicule n'est autorisé que lorsque le moteur thermique du véhicule fonctionne dans une zone de haut rendement.
La forme en deux parties des revendications 1 et 9 est basée sur ce dernier document. La demanderesse propose un système d'alimentation électrique pour véhicule comprenant deux batteries, ce système permettant non seulement d'augmenter la durée de vie de la batterie au plomb, mais également de réduire la consommation moyenne en carburant du véhicule. A cet effet, le système proposé comprend un alternateur pilotable capable de délivrer une tension d'alternateur basse, choisie pour maintenir chargée une des batteries destinée à fournir l'énergie nécessaire lors des démarrages du véhicule, et capable également de délivrer une tension d'alternateur haute, choisie pour permettre simultanément d'alimenter le réseau de bord du véhicule, et de recharger l'autre batterie à un niveau de charge qui permet à cette seconde batterie d'alimenter le réseau pendant les périodes de fonctionnement à tension d'alternateur basse. L'alternateur est de manière préférentielle piloté à la tension d'alternateur haute pendant les phases de freinage récupératif du véhicule. Pendant des périodes de roulage prolongées sans freinage récupératif, par exemple lors d'un roulage prolongé sur autoroute, la batterie dédiée à l'alimentation du réseau de bord va donc se décharger progressivement. Un des buts de l'invention est de proposer un procédé de gestion de l'alternateur qui évite de trop décharger la batterie alimentant le réseau de bord, tout en limitant la consommation globale en carburant du véhicule.

A cette fin, un système d'alimentation en énergie électrique d'un véhicule comportant un moteur thermique apte à propulser le véhicule, comprend :
- un réseau d'au moins un organe consommateur électrique,
- une première batterie d'accumulation électrique connectée au réseau,
- un alternateur pilotable connecté au réseau, entraîné par le moteur, et apte à délivrer au réseau une énergie électrique sous une tension de consigne pilotable à au moins une tension basse d'alternateur strictement positive, et à une tension haute d'alternateur strictement supérieure à la tension basse d'alternateur,
- un ampèremètre permettant de mesurer l'intensité instantanée consommée par le réseau électrique,
- un estimateur d'état de charge de la première batterie permettant d'estimer l'intensité du courant de recharge potentiel que la batterie serait capable d'absorber si elle était à cet instant alimentée à la tension haute d'alternateur, caractérisé en ce que le système comprend également :
- un compteur de régime de rotation de l'alternateur,
- une unité de commande électronique reliée au compteur, à l'estimateur d'état de charge et à l'ampèremètre, et reliée à une cartographie du rendement de l'alternateur en fonction du régime de l'alternateur et de l'intensité débitée par l'alternateur, l'unité de commande électronique étant configurée pour estimer un premier rendement de l'alternateur correspondant au régime de rotation actuel de l'alternateur, et à l'intensité de courant consommé effectivement débité dans le réseau, pour estimer un second rendement de l'alternateur correspondant au régime de rotation actuel de l'alternateur et à la somme des intensités du courant de recharge potentiel de la première batterie et dudit courant consommé, et pour imposer la tension haute d'alternateur si la différence entre le second rendement et le premier rendement est supérieure à un premier seuil. Le premier seuil peut être défini en valeur absolue ou en valeur relative. On peut par exemple imposer la seconde tension de consigne si le second rendement est supérieur en pourcentage par rapport au premier rendement, d'une valeur prédéfinie qui peut par exemple être choisie entre 5% et 30%, par exemple proche de 10% en valeur absolue. Par ampèremètre on entend un capteur ou un dispositif d'estimation relié à un ou plusieurs capteurs et permettant de déterminer l'intensité du courant circulant dans le circuit électrique. Selon un mode de réalisation préféré, la tension basse d'alternateur est la tension de fonctionnement imposée par défaut à l'alternateur hors des phases de freinage récupératif du véhicule.

Selon un mode de réalisation avantageux, l'unité de commande électronique est configurée pour cesser d'imposer une tension haute d'alternateur si la différence entre le second rendement et le premier rendement redevient inférieure à un second seuil inférieur ou égal au premier seuil.

Selon un mode de réalisation qui peut se combiner au précédent, l'unité de commande électronique est configurée pour imposer une tension basse d'alternateur si l'état de charge de la batterie devient supérieur à un troisième seuil ou si le courant de recharge potentiel devient inférieur à un quatrième seuil.

L'unité de commande électronique peut être reliée à un estimateur de rendement du moteur, et être configurée pour imposer la tension haute d'alternateur uniquement si le produit du rendement du moteur par le second rendement est supérieur à un cinquième seuil. Le rendement du moteur peut par exemple être obtenu à partir d'une cartographie reliant le point de fonctionnement du moteur {couple du moteur, vitesse de rotation du moteur}, et un rendement du moteur.

De préférence, le système comprend une seconde batterie d'accumulation électrique connectée à l'alternateur et apte à alimenter un démarreur apte à lancer le moteur du véhicule, la seconde batterie présentant une seconde tension maximale à vide qui est inférieure à une première tension maximale à vide de la première batterie, et qui est inférieure à la tension basse d'alternateur.

Selon un mode de réalisation avantageux, le système comprend une unité de suivi de roulage reliée à l'alternateur, apte à détecter différents types de roulage du véhicule, qui est configurée pour imposer la tension haute d'alternateur pendant au moins certaines phases de roulage du véhicule dont des phases de freinage récupératif, et pour imposer la tension basse d'alternateur pendant d'autres phases de roulage plus consommatrices en carburant que les premières phases de roulage, sauf si l'unité de commande électronique impose la tension haute d'alternateur. L'unité de suivi de roulage peut notamment être configurée pour imposer une tension haute d'alternateur quand le véhicule est en phase de freinage récupératif, et pour imposer la tension basse d'alternateur quand le véhicule est dans une phase d'accélération du moteur, ou dans un mode de roulage de type autoroutier. Suivant les variantes de réalisation, on peut configurer l'unité de commande électronique pour qu'elle impose la tension haute d'alternateur uniquement dans les cas où la vitesse de roulage du véhicule est stable depuis une durée supérieure à un sixième seuil, ou dans les cas où le mode de roulage du véhicule est le même depuis une durée supérieure à un septième seuil.

Selon un mode de réalisation particulier, le système comprend en outre un régulateur apte à faire varier le rapport d'entraînement entre le régime de rotation de l'alternateur et le régime de rotation du moteur. L'unité de suivi de roulage peut alors être reliée au régulateur et être configurée pour imposer au moins un premier rapport d'entraînement si elle détecte un roulage de type citadin, et pour imposer au moins un second rapport d'entraînement plus faible que le précédent, si elle détecte un roulage un roulage de type autoroutier. Par rapport d'entraînement on appelle ici le quotient de la vitesse de rotation de l'alternateur par la vitesse de rotation du moteur.

Selon un autre mode de réalisation particulier, le système comprend un régulateur apte à faire varier le rapport d'entraînement entre le régime de rotation de l'alternateur et le régime de rotation du moteur, l'unité de commande électronique étant reliée au régulateur et étant configurée pour calculer un premier rendement et un second rendement correspondant au régime actuel de l'alternateur, ainsi qu'un premier et un second rendement correspondant à un rapport d'entraînement différent du rapport actuel. L'unité de commande électronique est alors configurée de manière à ce que, si la différence entre le second rendement et le premier rendement est supérieure au premier seuil pour au moins l'un des deux rapports d'entraînement, l'unité de commande impose le rapport d'entraînement permettant d'obtenir le second rendement le plus élevé.

Selon un autre aspect, un procédé de gestion d'un véhicule automobile est proposé. Le véhicule est équipé d'une première batterie connectée à un alternateur et à un réseau électrique du véhicule, l'alternateur étant pilotable pour fonctionner soit à une tension basse d'alternateur strictement positive, soit à au moins une tension haute d'alternateur strictement supérieure à la tension basse d'alternateur. On estime l'intensité du courant de recharge potentiel que la première batterie serait capable d'absorber si elle était à cet instant alimentée à la tension haute d'alternateur. Le procédé est caractérisé en ce que: on estime un premier rendement d'alternateur correspondant au régime de rotation actuel de l'alternateur, et à l'intensité du courant consommé effectivement débité dans le réseau, on estime un second rendement d'alternateur correspondant au régime de rotation actuel de l'alternateur et à la somme des intensités du courant de recharge potentiel de la première batterie et dudit courant consommé, et on impose une tension haute d'alternateur si la différence entre le second rendement et le premier rendement est supérieure à un premier seuil.

Selon un mode de mise en oeuvre préféré, on fait varier le rapport d'entraînement entre le régime de rotation de l'alternateur et le régime de rotation d'un moteur entraînant l'alternateur, de manière à augmenter la différence entre le second rendement et le premier rendement, pour au moins une plage de régime de rotation du moteur.

D'autres buts, caractéristiques et avantages de l'invention apparaîtront à la lecture de la description suivante, donnée uniquement à titre d'exemple nullement limitatif, et faite en référence aux dessins annexés, sur lesquels :
- la figure 1 est une représentation schématique d'un système d'alimentation selon l'invention,
- la figure 2 est un graphique représentant les niveaux relatifs de différentes tensions intervenant dans le fonctionnement du système d'alimentation de la figure 1,
- la figure 3 est un graphe illustrant différents niveaux de courants d'un alternateur et d'une batterie d'un système d'alimentation selon l'invention,
- la figure 4 est un exemple de cartographie utilisée pour la mise en oeuvre de l'invention,
- la figure 5 est un exemple d'algorithme de pilotage d'un système d'alimentation selon l'invention.

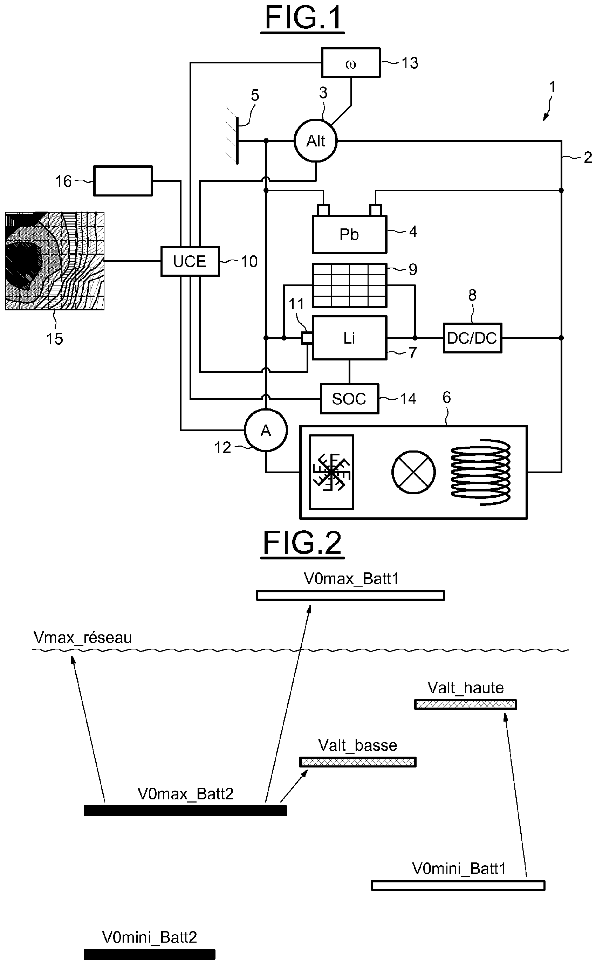

Tel qu'illustré sur la figure 1, un système 1 d'alimentation électrique d'un véhicule comprend un réseau électrique 2, un alternateur 3, une première batterie 7, par exemple une batterie de type lithium-ion, une seconde batterie 4, par exemple une batterie au plomb et une unité de commande électronique 10. La première batterie 7 est munie d'un interrupteur 11 permettant de la déconnecter du réseau 2. L'alternateur 3 est apte à convertir de l'énergie mécanique prélevée sur un arbre relié à un moteur thermique (non représenté) en énergie électrique envoyée sur le réseau électrique 2. Le système d'alimentation comprend également un ampèremètre 12 interposé dans le réseau 2 et branché en série avec les consommateurs 6, de manière à pouvoir mesurer le courant total absorbé à chaque instant par ces consommateurs, un compteur 13 apte à estimer le régime de rotation instantané ω de l'alternateur 3 (par exemple en mesurant directement le régime de rotation de l'alternateur, ou en mesurant le régime de rotation du moteur entraînant l'alternateur et en en déduisant le régime de rotation de l'alternateur), et un estimateur d'état de charge 14 relié à la première batterie 7, et apte à estimer un état de charge (couramment désigné par "SOC" = "state of charge") de la première batterie. L'état de charge peut être estimé par différentes méthodes, dont en particulier au moyen d'une cartographie fonction du couple {tension aux bornes de la batterie, courant débité ou absorbé par la batterie}. L'estimateur peut ainsi mesurer le couple {tension aux bornes de la batterie, courant débité ou absorbé par la batterie}, ou, pendant qu'une tension connue d'alternateur est appliquée, ne mesurer que le courant de la batterie 7. L'estimateur peut ensuite délivrer une grandeur adimensionnelle caractéristique de l'état de charge de la batterie, qui varie entre zéro (pour une batterie complètement déchargée) et 1 (pour une batterie complètement chargée), ou délivrer une valeur d'intensité I(SOC) que la batterie est capable d'absorber pour cet état de charge particulier. Dans le premier cas, l'estimateur utilisé pour l'invention peut être relié à un seconde cartographie permettant de lire l'intensité I(SOC) en fonction de l'état de charge SOC. Suivant les variantes de réalisation, l'état de charge SOC de la batterie peut être calculé comme une intégrale des courants entrants dans la batterie (y compris les courants sortants, comptés en négatif), divisée par la charge totale que la batterie est apte à stocker à l'état neuf, ou divisé par la charge que la batterie est capable de stocker dans son état de vieillissement actuel.

L'intensité I(SOC) du courant potentiel de recharge est le courant que la batterie serait capable d'absorber si elle était à cet instant alimentée à la tension haute d'alternateur. La cartographie utilisée (non représentée) dépend donc de la tension haute d'alternateur choisie. On peut cependant, par défaut, utiliser une cartographie de rendement établie à une autre tension d'alternateur, de préférence proche de la tension haute d'alternateur. Si par exemple la tension basse d'alternateur est de l'ordre de 13V et la tension haute d'alternateur est de l'ordre de 15V, on peut utiliser une cartographie établie pour la tension basse d'alternateur. Une cartographie établie à la tension haute d'alternateur sera cependant plus pertinente.

L'unité de commande électronique 10 est reliée à l'ampèremètre 12, au compteur 13 de régime d'alternateur et à l'estimateur 14 d'état de charge de la première batterie. L'unité de commande électronique 10 est également reliée à une cartographie de rendement 15, permettant de lire, en fonction d'un couple {ω, I} = {régime d'alternateur, courant débité par l'alternateur} établie pour l'alternateur 3 fonctionnant à la tension haute d'alternateur, un rendement de l'alternateur. Suivant les variantes de réalisation, l'unité de commande électronique 10 peut également être reliée à une unité de surveillance 16 du moteur qui entraîne l'alternateur 3 (moteur non représenté). L'unité de surveillance 16 peut par exemple être apte à détecter différents modes de roulage du véhicule quand celui-ci est propulsé par le seul moteur, et/ou peut être apte à calculer un rendement instantané du moteur, par exemple à l'aide d'une cartographie reliant le point de fonctionnement (couple, régime de rotation) du moteur et son rendement.

Sur le réseau électrique 2 sont disposés des consommateurs électriques 6, comme par exemple un dispositif de climatisation, des moyens d'éclairage et des moyens de chauffage. L'alternateur 3 est connecté aux bornes de la première batterie 7. La seconde batterie 4 est connectée en parallèle à la première batterie 7. Les consommateurs électriques 6 sont branchés par exemple en parallèle sur le réseau 2. Le réseau 2 comprend une mise à la masse 5 sur le châssis du véhicule. Le réseau 2 alimente également un démarreur (non représenté) apte à lancer le moteur thermique du véhicule afin d'initier le premier cycle de combustion.

Selon les variantes de réalisation, la première batterie 7 peut être reliée à un transformateur DC/DC 8 connecté en série à la batterie 7, de manière à ce que la tension aux bornes de la première batterie 7 puisse être plus élevée que la tension maximum du réseau 2.

Dans les variantes de réalisation où la première batterie 7 est associée à un transformateur de type DC/DC 8, des moyens de production d'énergie tels que des panneaux solaires 9 peuvent être branchés aux bornes de la première batterie 7, ce qui autorise la tension maximale délivrée par ces panneaux solaires 9 à être plus élevée que la tension maximum du réseau 2. L'unité de commande électronique est reliée à l'alternateur 3, auquel elle est apte à imposer une tension de consigne variable et notamment, auquel elle est apte à imposer deux valeurs distinctes de valeurs de consigne, une première valeur notée Valt_basse et une seconde valeur notée Valt_haute plus élevée que la première valeur.

L'unité de commande électronique 10 est également reliée à l'interrupteur 11 qui, peut être de type mécanique-électromagnétique, ou de type électronique, par exemple sous forme d'un transistor. En ouvrant l'interrupteur 11, l'unité de commande électronique 10 peut déconnecter la première batterie 7 du réseau, et éviter une décharge intempestive de cette première batterie 7.

La seconde batterie, notamment si la seconde batterie est une batterie au plomb, peut être utilisée de manière préférentielle au moment des démarrages du moteur thermique du véhicule, pour alimenter un démarreur. L'unité de commande électronique 10 déconnecte la première batterie 7 (par exemple une batterie lithium, et plus précisément de type lithium-ion) à l'aide de l'interrupteur 11, dès que le véhicule est en mode « parking ». On évite de cette manière de décharger la batterie 7. La première batterie 7 reste alors déconnectée du réseau jusqu'à ce que le prochain démarrage du moteur du véhicule ait été effectué.

Les batteries au plomb ont en effet une excellente capacité de démarrage à froid, et c'est donc la seconde batterie 4 au plomb qui est utilisée au moment du démarrage du moteur thermique du véhicule.

Les batteries au lithium ont une meilleure endurance en terme de cyclage, et c'est donc la première batterie qui est utilisée pour alimenter le réseau de bord du véhicule pendant le roulage du véhicule. La tension du réseau c'est-à-dire la tension mesurable entre les bornes de la seconde batterie 4, est imposée par celui des trois éléments, parmi l'alternateur 3, la seconde batterie 4 et la première batterie 7 éventuellement associée à un transformateur DC/DC, qui présente entre ses deux bornes la tension la plus élevée.

Par « bornes » de chacun des éléments, on entend les deux points de connexion de cet élément au réseau 2.

Dans le cas où le système inclut un transformateur DC/DC 8, connecté comme décrit sur la figure 1, on entend par tension aux bornes de l'ensemble [première batterie 7, transformateur DC/DC 8], la tension entre les deux points de connexion de cet ensemble, au réseau 2.

Quand l'alternateur 3 ne tourne pas, par exemple au moment du démarrage du véhicule, et que la première batterie 7 est déconnectée au moyen de l'interrupteur 11, c'est la seconde batterie 4 qui impose la tension sur le réseau 2.

Quand le véhicule roule et que l'alternateur 3 fonctionne, on choisit de piloter la consigne de tension de l'alternateur 3 au dessus de la tension maximale à vide de la seconde batterie 4. De cette manière, ce n'est pas la seconde batterie 4 qui fournit l'énergie électrique du circuit 2. Selon que la tension de l'alternateur 3 est plus élevée ou plus basse que la tension de la première batterie 7, ce sera alors soit l'alternateur 3, soit la première batterie 7, soit les deux simultanément, qui fourniront l'énergie électrique du réseau 2.

Dans le cadre de l'invention, on choisit une première batterie 7 dont la tension maximale à vide est suffisamment supérieure à la tension maximale à vide de la seconde batterie 4, de manière à pouvoir imposer alternativement deux modes de fonctionnement.

Dans un premier mode de fonctionnement, la tension d'alternateur est fixée à une valeur basse « Valt_basse », qui est supérieure à la tension à vide maximale de la seconde batterie « V0max_batt2 », elle-même inférieure à la tension maximale tolérée par le réseau « Vmax_réseau ». La tension d'alternateur « Valt_basse » est inférieure à la tension maximale à vide de la première batterie 7 « V0max_batt1 ».

Dans un second mode de fonctionnement, la tension d'alternateur est égale à une valeur haute de tension d'alternateur « Valt_haute », qui est supérieure à la tension basse d'alternateur, tout en restant inférieure à la tension maximale tolérée par le réseau.

De cette manière, quand l'alternateur 3 est régulé pour délivrer la tension basse d'alternateur, et que la première batterie 7 est suffisamment chargée pour que sa tension soit supérieure à la tension basse d'alternateur, c'est la première batterie 7 qui fournit l'énergie électrique au réseau 2. Quand, dans ce mode de fonctionnement, la tension de fonctionnement de la première batterie 7 descend au niveau de la tension basse d'alternateur, une partie de l'énergie électrique du réseau 2 est fournie par la première batterie 7, et une partie de l'énergie électrique est fournie par l'alternateur 3.

Quand l'unité de commande électronique 10 impose le second mode de fonctionnement, dans lequel on impose la tension haute d'alternateur, si la tension à vide de la première batterie est inférieure à la tension haute d'alternateur, c'est alors l'alternateur qui fournit l'énergie électrique au réseau et qui fournit simultanément une énergie permettant la recharge de la première batterie 7.

Si aucun autre moyen que l'alternateur 3 n'est prévu pour recharger la première batterie 7, la première batterie 7 peut donc se recharger pendant les phases où on impose la tension haute d'alternateur, et peut fournir de l'énergie au réseau tant que sa tension reste supérieure à la tension basse d'alternateur, pendant les phases où l'unité de commande électronique 10 impose la tension basse d'alternateur.

On impose de préférence une tension basse d'alternateur tout juste supérieure à la tension maximale à vide de la seconde batterie, de manière à ce que, pendant les phases où la tension basse d'alternateur est imposée, l'alternateur prélève le moins possible d'énergie mécanique sur l'arbre moteur entraîné par le moteur thermique. L'alternateur ne crée ainsi qu'une surconsommation limitée de carburant, tout en assurant que la seconde batterie reste constamment chargée à son niveau maximal.

Dans le premier mode de fonctionnement, tant que la première batterie 7 est suffisamment chargée (c'est-à-dire tant que sa tension est supérieure à la tension basse d'alternateur), c'est la première batterie 7 qui fournit l'énergie électrique au réseau 2.

Les phases où l'on impose la tension haute d'alternateur en vue de recharger la première batterie 7, sont de préférence les phases de roulage à faible coût en carburant, par exemple les phases de décélération récupérative. Les phases de décélération récupérative sont des phases durant lesquelles le véhicule est dans un mode de décélération permettant d'utiliser le frein moteur, et permettant d'utiliser une partie de l'énergie mécanique de l'arbre moteur pour faire tourner l'alternateur. Il suffit par exemple pour cela que la consigne à la pédale du véhicule corresponde à une phase de décélération moteur.

Une partie de l'énergie cinétique de freinage du véhicule sert alors à recharger la première batterie 7. Cette énergie récupérée pendant les phases de freinage permet ensuite d'économiser du carburant, en limitant la tension d'alternateur imposée pendant les phases de roulage correspondant au premier mode de fonctionnement.

La figure 2 illustre un exemple de positionnement relatif des différentes valeurs de tensions mentionnées précédemment dans la description du système d'alimentation électrique 1. Les différents niveaux représentés sur la figure 2 illustrent la tension minimale à vide de la seconde batterie 4 soit V0mini_batt2, la tension maximale à vide de la seconde batterie 4 soit V0max_batt2, la tension minimale à vide V0mini_batt1 de la première batterie 7, la tension maximale à vide V0max_batt1 de la première batterie, la tension basse d'alternateur Valt_basse, la tension haute d'alternateur Valt_haute et la tension maximale Vmax_réseau que le réseau 2 est capable de supporter sans être endommagé.

De manière typique, si l'on fonctionne avec une batterie au plomb comme seconde batterie 4, et avec, comme première batterie, une batterie de type lithium-ion issue de la récupération de batteries lithium-ion ayant servi à propulser des véhicules électriques ou hybrides, la tension minimale à vide V0mini_batt2 de la seconde batterie au plomb est de l'ordre de 12 volts, et correspond sensiblement à la tension minimale à vide V0mini_batt1 de la première batterie au lithium, ou est un peu inférieure.

La tension maximale à vide V0max_batt2 de la seconde batterie au plomb est de l'ordre de 12,8 volts, et la tension basse d'alternateur Valt_basse que l'on impose pour être juste au dessus de cette tension maximale à vide est de l'ordre de 13,2 volts.

La tension maximale à vide V0max_batt1 de la première batterie au lithium peut être de l'ordre de 16,8 volts, et la tension haute d'alternateur Valt_haute de l'ordre de 15 volts afin de rester en dessous de la valeur maximale acceptée par le réseau Vmax_réseau, qui elle, est de l'ordre de 16 volts.

Il est envisageable d'utiliser d'autres types de batterie pour la première et pour la seconde batterie, et la tension maximale de la première batterie n'est pas obligatoirement supérieure à la tension maximale du réseau. La tension basse d'alternateur doit de préférence être supérieure à la tension maximale à vide de la seconde batterie. On pourrait éventuellement envisager un mode de réalisation où la tension basse d'alternateur serait très légèrement inférieure à la tension maximale à vide de la seconde batterie, mais on imposerait alors inutilement des cycles de charge et de décharge à la seconde batterie en réduisant la durée de vie de celle-ci.

La tension maximale de la première batterie devra être obligatoirement supérieure à la tension maximale à vide de la seconde batterie, de manière à pouvoir définir une valeur de tension basse d'alternateur entre ces deux valeurs de tension maximale à vide des deux batteries.

La tension haute d'alternateur peut être égale, voire supérieure à la tension maximale à vide de la première batterie, par exemple si la tension maximale de la première batterie est inférieure à la tension maximale tolérée par le réseau.

La tension minimale à vide de la première batterie doit être inférieure à la tension haute d'alternateur afin de permettre une charge au moins partielle de la première batterie 7 pendant les phases de fonctionnement avec la tension haute d'alternateur.

La première batterie 7 peut être rechargée, outre pendant les phases où l'alternateur tourne à sa valeur de tension élevée, par des moyens de production électriques supplémentaires tels que les panneaux solaires 9. Dans le cas où la tension maximale à vide de la première batterie est inférieure à la tension maximale tolérée par le réseau, ou dans le cas où le système comprend un transformateur DC/DC apte à abaisser la tension délivrée par la première batterie à une tension inférieure à la tension maximale tolérée par le réseau, on peut également envisager de recharger la première batterie 7 sur un réseau extérieur au véhicule, par exemple sur une aire de stationnement.

La tension maximale à vide de la première batterie 7, c'est-à-dire V0max_batt1, peut être inférieure ou supérieure à la tension maximale acceptée par le réseau 2. Si la tension maximale à vide de la première batterie est supérieure à la tension maximale acceptée par le réseau Vmax_réseau, selon une première variante de réalisation, on exploite la première batterie 7 sur une partie seulement de son domaine de fonctionnement c'est-à-dire par exemple entre la tension basse d'alternateur et la tension haute d'alternateur.

Selon une seconde variante de fonctionnement, on peut exploiter la première batterie 7 sur un domaine plus large, par exemple entre la tension basse d'alternateur et la tension maximale à vide acceptée par la première batterie 7, si par exemple le système est muni d'un transformateur DC/DC 8, apte à abaisser la tension délivrée par la première batterie 7 de manière à l'amener à une valeur inférieure ou égale à la tension maximale tolérée par le réseau.

Dans ce cas, on peut par exemple envisager de charger la première batterie 7 à sa tension maximale à vide à partir d'un réseau extérieur au véhicule, quand le véhicule est à l'arrêt. On utilise ensuite cette réserve d'énergie pendant le roulage du véhicule en la complétant par une recharge partielle de la batterie à une tension haute d'alternateur quand le véhicule est en décélération récupérative.

Si le transformateur DC/DC est bidirectionnel, on peut même envisager de charger la première batterie à sa tension maximale à vide en élevant la tension aux bornes de la première batterie 7 par rapport à la tension haute d'alternateur pendant les phases de décélération récupérative.

Par sécurité, afin d'éviter une décharge même partielle de la seconde batterie 4, la tension basse d'alternateur est choisie légèrement supérieure à la tension maximale à vide de la seconde batterie 4.

La tension minimale à vide de la première batterie 7 est de préférence inférieure à la tension basse d'alternateur de manière à ce que, lorsque le véhicule est dans un mode de roulage où la tension basse d'alternateur est imposée par l'unité de commande électronique 10, l'énergie fournie par l'alternateur vienne automatiquement compléter l'énergie fournie par la première batterie 7 lorsque la tension de celle-ci vient à baisser. On évite ainsi que la tension de la première batterie 7 puisse descendre à la tension minimale tolérée V0mini_batt1.

On pourrait envisager des variantes de réalisation où la tension minimale à vide de la première batterie serait supérieure à la tension basse d'alternateur, mais il faut pour une telle variante que l'unité de commande électronique 10 impose une tension haute d'alternateur avant que la tension de la première batterie 7 ne descende en dessous de sa valeur minimale. Il faut, dans tous les cas, que la tension minimale à vide de la première batterie 7 soit inférieure à la tension haute d'alternateur.

La tension basse d'alternateur est de préférence inférieure à la tension maximale à vide de la première batterie 7. Elle est aussi proche que possible, par valeur supérieure, de la tension maximale à vide de la seconde batterie, tout en gardant une marge d'écart afin d'être sûr que l'alternateur régulé en tension basse d'alternateur reste au dessus de cette valeur minimale V0max_batt2.

Il est avantageux d'utiliser une première batterie 7 dont la tension maximale à vide V0max_batt1 est supérieure à la tension maximale Vmax_réseau du réseau 2, ce qui permet, pour choisir les valeurs de la tension basse d'alternateur et de la tension haute d'alternateur, de disposer de tout l'intervalle de tension compris entre la tension maximale à vide de la seconde batterie V0max_batt2 et la tension maximale acceptée par le réseau Vmax_réseau.

On se trouve en particulier dans cette configuration lorsque l'on a un réseau 2 du véhicule dont la tension maximale acceptable est de l'ordre de 15 à 16 volts, et que l'on utilise comme seconde batterie 4 une batterie au plomb, dont la tension maximale à vide est d'environ 12,8 volts, et une batterie lithium-ion pour la première batterie 7, par exemple une batterie lithium-ion reconditionnée suite à une utilisation pour la propulsion de véhicule électrique. Une telle batterie reconditionnée présente par exemple une tension maximale à vide de l'ordre de 16,8 volts et une tension minimale à vide acceptable voisine de 12 volts.

Outre le basculement à une tension d'alternateur haute pendant les phases de décélération du véhicule, des stratégies complémentaires implémentées dans l'unité de commande électronique 10 peuvent être définies, afin d'éviter une décharge excessive de la première batterie 7 dans les cas de figure où les phases de décélération récupérative ne sont pas suffisamment fréquentes et/ou suffisamment prolongées.

On peut alors choisir d'imposer une tension d'alternateur intermédiaire entre la tension basse d'alternateur et la tension haute d'alternateur, c'est-à-dire strictement supérieure à la tension basse d'alternateur et inférieure ou égale à la tension haute d'alternateur. Une ou plusieurs tensions intermédiaires peuvent ainsi être imposées pendant certaines phases de roulage qui peuvent laisser supposer que les prochaines décélérations sont éloignées dans le temps. Ces phases de roulage peuvent comprendre des modes de roulage de type autoroutier. Une ou plusieurs tensions intermédiaires peuvent également être imposées pour des modes de roulage préprogrammés dans l'unité de commande électronique parce que le point de fonctionnement du moteur, pour ces modes de roulage, correspond à une consommation en carburant moins élevée que pour d'autres modes de roulage.

L'invention propose un procédé de gestion de l'alternateur pendant certains modes de roulage, afin de déclencher une tension intermédiaire d'alternateur ou une tension haute d'alternateur et de recharger la première batterie, tout en limitant la surconsommation de carburant ainsi induite. Pour simplifier la description, on considère dans la suite de l'explication que la tension alors imposée est la tension haute d'alternateur.

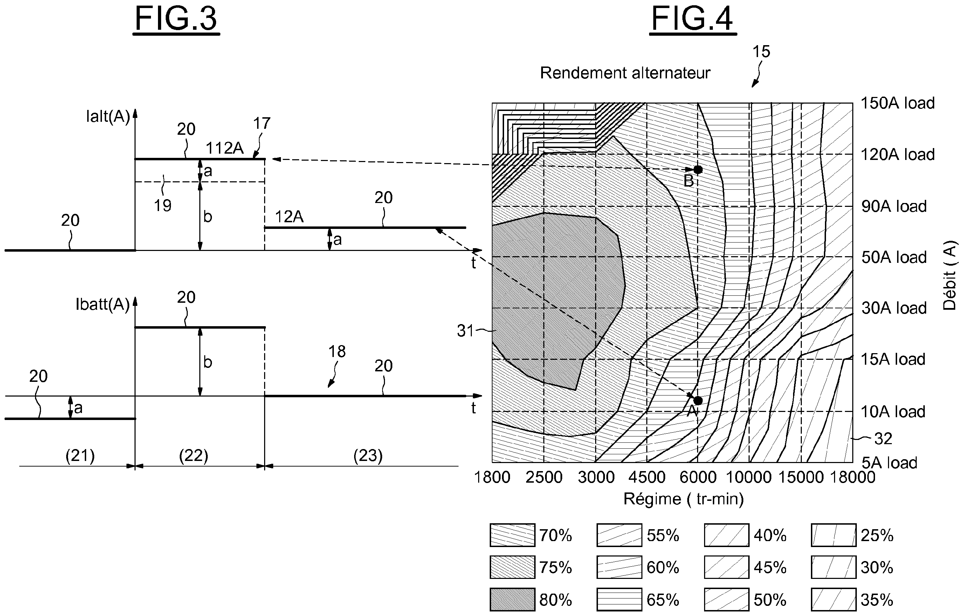

La figure 3 montre deux graphes 17 et 18. Le graphe 17 illustre, pour trois intervalles de temps 21, 22, 23, des valeurs d'intensité de courant délivrées par l'alternateur. Le graphe 18 illustre, pour les mêmes intervalles de temps 21, 22, 23, l'intensité de courant reçu par la première batterie 7.

Les intervalles de temps 21, 22, 23 illustrés ici comme des intervalles de temps successifs, peuvent être des intervalles de temps indépendants les uns de autres, se succédant dans le temps dans un ordre différent de celui illustré. Pendant l'intervalle de temps 21, l'alternateur 3 est piloté à la tension basse d'alternateur. Il ne fournit donc pas de courant, le courant du réseau 2 étant assuré par la première batterie 7, ayant une valeur d'intensité « a », égale à 12A dans l'exemple illustré.

Durant l'intervalle de temps 21, la première batterie 7 fournit donc du courant d'intensité « a » au réseau tandis que l'alternateur 3 fournit un courant d'intensité nulle, ou autrement dit il ne fournit pas de courant au réseau.

Pendant l'intervalle de temps 23, on suppose que la première batterie 7 est déchargée, et ne pourrait à elle seule assurer l'alimentation du réseau. Pour pallier à cet état de la première batterie sans engendrer une surconsommation de carburant trop importante, l'interrupteur 11 est ouvert, et l'alternateur 3 fournit une intensité de courant « a » au réseau 2, sans fournir de courant à la batterie.

Ce mode de fonctionnement peut être prévu si les phases à tension d'alternateur haute n'ont pas été suffisamment nombreuses pendant les roulages précédents du véhicule, en attendant que des phases de type freinage récupératif permettent de recharger la première batterie à moindre coût.

Pendant l'intervalle de temps 22, l'alternateur 3 fonctionne à la tension d'alternateur haute et l'interrupteur 11 est fermé, si bien que l'alternateur 3 fournit à la première batterie un courant d'intensité « b » en même temps qu'il fournit au réseau un courant d'intensité « a ». La première batterie 7 reçoit donc une courant d'intensité « b » et l'alternateur délivre un courant d'intensité a+b, ici d'intensité égale à 112A.

Dans l'exemple illustré, l'intensité du courant a absorbé par le réseau est de l'ordre de 12 ampères, l'intensité de courant que la batterie est capable d'absorber lors de sa recharge est de l'ordre de 100 ampères, ce qui correspond à une batterie partiellement déchargée.

L'intervalle de temps 21 représente donc un mode de fonctionnement qui peut être utilisé dès que la première batterie est suffisamment chargée. Les intervalles de temps 22 et 23 représentent deux modes de fonctionnement où l'alternateur est piloté à la tension haute d'alternateur. Sur l'intervalle de temps 22, l'alternateur fournit suffisamment de courant pour alimenter simultanément la batterie et le réseau, ce qui permet, ultérieurement, de repasser au mode de fonctionnement décrit à l'intervalle de temps 21. Sur l'intervalle de temps 23 l'alternateur est piloté à sa tension d'alternateur haute pour fournir tout juste le courant nécessaire au réseau, de manière à limiter les surconsommations de carburant à cet instant.

Ce mode de fonctionnement nécessite cependant une phase ultérieure de rechargement de la batterie qui pourra soit avoir lieu lors des phases de freinage récupératif à venir, soit qui pourra être déclenchée à un moment arbitraire. Or, en fonction du mode de roulage et de la consommation instantanée en carburant du réseau, la surconsommation de carburant induite lors de ce déclenchement peut être plus ou moins élevée.

L'invention propose de comparer le rendement de l'alternateur, pour les conditions de roulage actuelles, suivant que l'on choisit le mode de fonctionnement illustré pour l'intervalle de temps 22 et le mode de fonctionnement illustré pour l'intervalle de temps 23. Cette comparaison se fait à l'aide d'une cartographie de rendement 15, illustrée en figure 4. On choisit alors de déclencher la tension haute d'alternateur si le rendement correspondant au mode de fonctionnement de l'intervalle de temps 22 est plus favorable que celui correspondant au mode de fonctionnement de l'intervalle de temps 23.

La figure 4 illustre une cartographie de rendement de l'alternateur 3. La cartographie 15 relie un régime de rotation ici en tours par minute, représenté en abscisse, un débit (en ampères) de courant débité par l'alternateur, représenté en ordonnée, et un rendement de l'alternateur indiqué par les différents types de hachures. Le rendement de l'alternateur peut par exemple être défini par le quotient de la puissance électrique instantanée débitée par l'alternateur, par la puissance mécanique fournie à l'alternateur. Les légendes correspondant aux différents types de hachures indiquent le rendement minimal de l'alternateur dans le domaine d'iso-rendement correspondant à ce type de hachures particulier. Ainsi, les hachures denses du domaine de rendement maximal 31 formant une plage sensiblement circulaire sur la gauche de la cartographie, délimitent une plage de rendements compris entre 80% et 85%. La plage de rendement minimal 32 sur la partie inférieure droite du graphique correspond à une plage de rendements compris entre 35% et 40%.

On constate sur la cartographie 15 que les rendements de l'alternateur sont relativement élevés, de l'ordre de 80 à 85%, pour des intensités comprises sensiblement entre 15 et 80 ampères et pour des régimes de rotation compris entre 1800 tours/minute et un peu plus de 3000 tours/minute.

Ces rendements diminuent ensuite en zone sensiblement concentrique en s'éloignant de cette zone optimale. Si l'on reporte sur cette cartographie 15 un point A correspondant à un régime de rotation de l'alternateur lors d'un roulage sur autoroute, soit de l'ordre de 6000 tours/minute, et correspondant à une intensité de courant « a », qui est l'intensité de fonctionnement du réseau illustré sur la figure 3, on obtient un point A qui se situe dans la plage de rendement de 60 à 65%.

Si on reporte sur cette même cartographie 15 un point B correspondant, pour le même régime de rotation de l'alternateur, à 6000 tours/minute et à un courant qui est le courant débité par l'alternateur dans le mode de fonctionnement de l'instant 22 de la figure 3, soit de l'ordre de 112 ampères, on obtient un point B qui se situe dans la zone de rendement comprise entre 70 et 75%.

Autrement dit, l'électricité utilisée pour alimenter le réseau 2, et pour recharger simultanément la batterie 7, dans le mode de fonctionnement de l'intervalle de temps 22, est obtenue avec un rendement de l'alternateur qui est de supérieur d'un incrément de 10% (en valeur absolue) au mode de fonctionnement de l'alternateur durant l'intervalle de temps 23.

On peut donc décider, en imaginant que les modes de roulage actuels du véhicule pourraient se prolonger, de stocker régulièrement de l'énergie dans la première batterie, même si le véhicule n'est pas en phase de freinage récupératif, plutôt que de produire l'énergie électrique juste nécessaire pour le réseau électrique.

Le gain en rendement peut être moins favorable si par exemple l'énergie consommée par le réseau électrique est plus élevée, faisant passer le point A dans une zone de rendement supérieur, ou si la batterie est davantage chargée, ce qui réduit le courant total que l'alternateur peut débiter, abaissant ainsi le point B jusqu'à éventuellement le faire passer dans une région de moindre rendement.

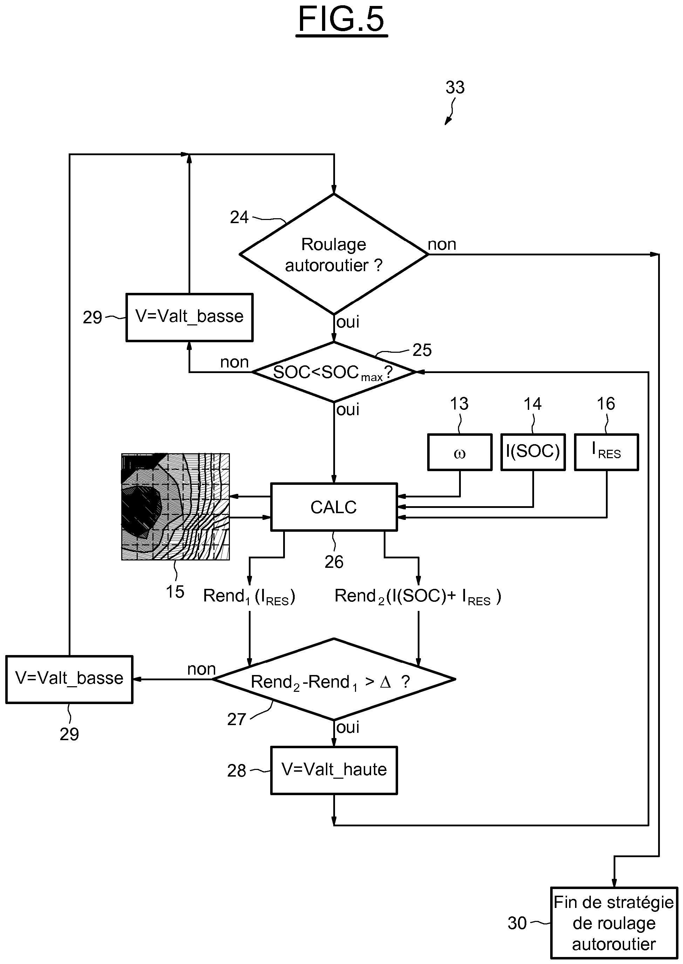

La figure 5 illustre un algorithme de fonctionnement de l'unité de commande électronique 10, permettant d'imposer une tension d'alternateur haute pendant certaines phases de roulage autoroutier où le gain en rendement de l'alternateur semble suffisamment intéressant.

A une étape 24, l'unité de commande électronique 10 effectue un test pour savoir si le véhicule est en mode de roulage autoroutier ou dans un autre mode de roulage dans lequel, par défaut, une tension basse d'alternateur est imposée.

Si tel n'est pas le cas, l'unité de commande 10 met en oeuvre, à partir d'une étape 30, une stratégie adaptée aux autres modes de roulage. Si le test 24 indique que le véhicule est en mode de roulage autoroutier, l'unité de commande 10 effectue à une étape 25 un test pour savoir si l'état de charge SOC de la batterie 7 est inférieur à une valeur SOCₘₐₓ.

Si tel n'est pas le cas, l'unité de commande 10 impose à une étape 29 une tension basse d'alternateur, et réeffectue le test 24. Si l'état de charge SOC est inférieur au seuil spécifié au test 25, à une étape de calcul 26 l'unité de commande 10 utilise les valeurs ω de régime de rotation de l'alternateur délivrées par le compteur 13, l'intensité I(SOC) de courant que la batterie 7 est capable d'absorber-délivrée par l'estimateur d'état de charge 14-, et la valeur Iᵣₑₛ d'intensité de courant effectivement consommé par le réseau 2 - délivrée par l'ampèremètre 12-.

L'unité de commande électronique utilise ces valeurs pour déterminer deux valeurs de rendement Rend₁ et Rend₂ : Rend₁ correspond au rendement de l'alternateur dans l'hypothèse où l'alternateur, pour son régime courant de rotation, ne délivrerait que l'intensité nécessaire au réseau, et Rend₂ correspond au rendement qu'aurait l'alternateur s'il délivrait à la fois l'intensité nécessaire pour alimenter le réseau et l'intensité qu'est capable d'absorber la batterie 7.

A une étape 27, l'unité de commande électronique 10 compare ensuite ces deux valeurs pour déterminer si la différence entre le second rendement et le premier rendement est supérieure à un incrément Δ. L'incrément Δ peut par exemple être de l'ordre de 10% en valeur absolue. On peut envisager de définir des incréments de rendement plus élevés ou plus faibles, par exemple des incréments de rendement allant de 7% à 20% d'incrément de rendement.

On peut également envisager de quantifier l'incrément de rendement en valeur relative par rapport à Rend₁ ou par rapport à Rend₂.

Si l'incrément de rendement est supérieur au seuil Δ, l'unité de commande électronique impose, à une étape 28, une tension d'alternateur haute, puis réeffectue le test 25 d'évaluation d'état de charge de la batterie. En fonction du résultat du test 25, l'unité de commande électronique 10 retourne alors à l'étape de test 24 ou effectue une nouvelle fois les étapes 26 et 27.

Si le résultat du test 27 est négatif, c'est-à-dire si la différence entre les rendements est inférieure ou égale au seuil A, l'unité de commande électronique 10 impose, à une étape 29, une tension d'alternateur basse et, réeffectue le test 24 pour savoir si le véhicule est toujours en mode de roulage autoroutier.

Ainsi, pendant le mode de roulage autoroutier, l'unité de commande électronique 10 impose une tension d'alternateur haute à chaque fois que le test 24 indique que les conditions de roulage actuelles et l'état de charge actuel de la batterie sont plus favorables à une production d'électricité à fort ampérage qu'à une production d'électricité juste nécessaire pour alimenter le réseau.

L'objet de l'invention ne se limite pas aux exemples de réalisation décrits et peut faire l'objet de nombreuses variantes, aussi bien en ce qui concerne l'agencement des différents éléments du système 1, les algorithmes de fonctionnement implantés dans l'unité de commande électronique 10 et/ou le choix des types de batteries ou autres types d'accumulateurs.

La tension basse et la tension haute imposées aux bornes de la première batterie 7, peuvent être obtenues soit en régulant la tension délivrée par l'alternateur à deux niveaux différents, soit en élevant la tension aux bornes de la première batterie à l'aide d'un transformateur DC/DC. La tension haute peut également être obtenue en élevant à la fois la tension de consigne aux bornes de l'alternateur et en transformant cette tension, à l'aide du transformateur DC/DC, en une tension encore plus élevée aux bornes de la première batterie. Un des avantages de l'invention est cependant de pouvoir être mis en oeuvre sans implanter de transformateur DC/DC, ce qui permet de limiter les coûts de mise en oeuvre de l'invention.

L'algorithme de fonctionnement, dont un exemple est donné en figure 5, n'est qu'un algorithme simplifié qui admet de très nombreuses variantes. L'étape de test de l'état de charge de la batterie 7 par rapport à un seuil est facultative, car un état de charge élevé induit également un gain de rendement Δ réduit. Cet algorithme n'est qu'une portion d'un algorithme plus complexe permettant de prendre en compte les différents modes de roulage du véhicule, et d'imposer par exemple une tension haute d'alternateur pendant les phases de freinage récupératif. On peut prévoir des tests supplémentaires pendant la supervision de l'alternateur au cours du même mode de roulage, comme une temporisation par rapport au début de la détection de ce mode de roulage particulier, des phases de test et d'équilibrages de différentes sous cellules constituant la première batterie, et/ou des tests sur un état de charge critique minimal de la première batterie.

Les accumulateurs électriques désignés sous le terme de première et seconde batterie peuvent être des batteries d'accumulation de type électrochimique, par exemple une seconde batterie au plomb et une première batterie de type lithium-ion. On peut également envisager d'utiliser pour la première batterie d'autres types de batteries lithium que les batteries lithium-ion, d'autres batteries de type électrochimique ou encore un ou plusieurs supercondensateurs.

L'invention peut être utilisée pour un système d'alimentation d'un véhicule à propulsion par un moteur thermique. Elle peut également être utilisée pour un système d'alimentation électrique d'un véhicule à propulsion hybride thermique-électrique, pendant les phases de propulsion par le moteur thermique. Dans ce dernier cas, on peut par exemple utiliser une batterie au lithium comme seconde batterie servant à la fois pour le démarrage du véhicule et pour la propulsion occasionnelle du véhicule, et une première batterie de type supercapacité pour accumuler de l'énergie pendant les phases de décélération.

Le mode de gestion décrit en figure 5 permet, y compris pendant des phases de roulage où l'énergie disponible pour l'alternateur n'est pas "gratuite", de recharger la première batterie en limitant la surconsommation de carburant induite par cette recharge. Il est ainsi possible d'utiliser la cartographie de rendement de l'alternateur, pour, en fonction du gain de rendement Δ, imposer la tension haute d'alternateur, non seulement au cours de roulage autoroutiers, mais également pour d'autres types de roulage ou d'historiques de l'état de charge de la première batterie. Le terme "roulage autoroutier" de la figure 5 n'est donc qu'un exemple. De même, la tension haute d'alternateur indique en figure 5 peut être une tension intermédiaire d'alternateur. La cartographie de rendement devra alors correspondre à une cartographie réalisée pour cette tension intermédiaire d'alternateur.

Il est également possible de modifier de manière dynamique la cartographie de rendement de l'alternateur, en interposant entre l'alternateur et le moteur qui l'entraîne, qui est aussi un moteur de propulsion du véhicule, un régulateur apte à faire varier le rapport d'entraînement entre le régime de rotation de l'alternateur et le régime de rotation du moteur. Il est ainsi possible d'améliorer le gain de rendement Δ, soit en décalant systématiquement le régime de rotation de l'alternateur pour certains régimes de rotation du moteur, soit en décalant le régime de rotation de l'alternateur en fonction de plusieurs simulations de gains de rendement effectuées par l'unité de commande électronique. D'autres stratégies de modulation du rapport d'entraînement sont bien sûr envisageables. Le mode de pilotage de la figure 5 peut être utilisé indépendamment de la présence d'une seconde batterie, par exemple si la première batterie est apte à assurer le démarrage du véhicule.

Le système selon l'invention permet de réduire la consommation globale en carburant du véhicule, de prolonger la durée de vie de la seconde batterie, et, dans le cas où on utilise comme première batterie une batterie au lithium reconditionnée, de réduire le coût et l'empreinte écologique du système.

## Revendications

1. Système (1) d'alimentation en énergie électrique d'un véhicule comportant un moteur thermique apte à propulser le véhicule, comprenant :
- un réseau (2) d'au moins un organe (6) consommateur électrique,
- une première batterie (7) d'accumulation électrique connectée au réseau (2),
- un alternateur (3) pilotable connecté au réseau (2), entraîné par le moteur, et apte à délivrer au réseau (2) une énergie électrique sous une tension de consigne pilotable à au moins une tension basse d'alternateur (Valt_basse) strictement positive, et à une tension haute d'alternateur (Valt_haute) strictement supérieure à la tension basse d'alternateur,
- un ampèremètre (12) permettant de mesurer l'intensité instantanée (Iᵣₑₛ) consommée par le réseau électrique (2),
- un estimateur d'état de charge (14) de la première batterie (7) permettant d'estimer l'intensité (I(SOC)) du courant de recharge potentiel que la première batterie serait capable d'absorber si elle était à cet instant alimentée à la tension haute d'alternateur (Valt_haute), **caractérisé en ce que** le système comprend également :
- un compteur (13) de régime de rotation de l'alternateur (3),
- une unité de commande électronique (10) reliée au compteur (13), à l'estimateur d'état de charge (14) et à l'ampèremètre (12), et reliée à une cartographie (15) du rendement de l'alternateur en fonction du régime de l'alternateur et de l'intensité débitée par l'alternateur, l'unité de commande électronique (10) étant configurée pour estimer un premier rendement (Rend₁) de l'alternateur correspondant au régime de rotation actuel (ω) de l'alternateur, et à l'intensité de courant (Iᵣₑₛ) consommé effectivement débité dans le réseau (2), pour estimer un second rendement de l'alternateur (Rend₂) correspondant au régime de rotation actuel de l'alternateur et à la somme (I(SOC)+Iᵣₑₛ) des intensités du courant de recharge potentiel de la première batterie (I(SOC)) et dudit courant consommé (Iᵣₑₛ), et pour imposer la tension haute d'alternateur (Valt_haute) si la différence entre le second rendement et le premier rendement est supérieure à un premier seuil (Δ).

2. Système selon la revendication 1, dans lequel l'unité de commande électronique (10) est configurée pour cesser d'imposer une tension haute d'alternateur (Valt_haute) si la différence entre le second rendement et le premier rendement redevient inférieure à un second seuil inférieur ou égal au premier seuil.

3. Système selon la revendication 1 ou 2, dans lequel l'unité de commande électronique (10) est configurée pour imposer une tension basse d'alternateur (Valt_basse) si l'état de charge de la première batterie (7) devient supérieur à un troisième seuil ou si le courant de recharge potentiel (I(SOC)) devient inférieur à un quatrième seuil.

4. Système selon l'une quelconque des revendications précédentes, dans lequel l'unité de commande électronique (10) est reliée à un estimateur de rendement du moteur (16), et est configurée pour imposer la tension haute d'alternateur (Valt_haute) uniquement si le produit du rendement du moteur par le second rendement est supérieur à un cinquième seuil.

5. Système d'alimentation selon l'une quelconque des revendications précédentes, comprenant en outre une seconde batterie (4) d'accumulation électrique connectée à l'alternateur et apte à alimenter un démarreur apte à lancer le moteur du véhicule, la seconde batterie (4) présentant une seconde tension maximale à vide (V0max_Batt2) qui est inférieure à une première tension maximale à vide de la première batterie (V0max_Batt1), et qui est inférieure à la tension basse d'alternateur (Valt_basse).

6. Système selon la revendication 5, comprenant une unité de suivi de roulage (16) reliée à l'alternateur, apte à détecter différents types de roulage du véhicule, et qui est configurée pour imposer la tension haute d'alternateur (Valt_haute) pendant au moins certaines phases de roulage du véhicule dont des phases de freinage récupératif, et pour imposer la tension basse d'alternateur (Valt_basse) pendant d'autres phases de roulage plus consommatrices en carburant que les premières phases de roulage, sauf si l'unité de commande électronique impose la tension haute d'alternateur.

7. Système selon la revendication précédente, comprenant en outre un régulateur apte à faire varier le rapport d'entraînement entre le régime de rotation de l'alternateur et le régime de rotation du moteur, l'unité de suivi de roulage (16) étant reliée au régulateur et étant configurée pour imposer au moins un premier rapport d'entraînement si elle détecte un roulage de type citadin, et pour imposer au moins un second rapport d'entraînement plus faible que le précédent, si elle détecte un roulage de type autoroutier.

8. Système selon l'une quelconque des revendications 1 à 6, comprenant un régulateur apte à faire varier le rapport d'entraînement entre le régime de rotation de l'alternateur et le régime de rotation du moteur, l'unité de commande électronique (10) étant reliée au régulateur et étant configurée pour calculer un premier rendement et un second rendement correspondant au régime actuel de l'alternateur, ainsi qu'un premier et un second rendement correspondant à un rapport d'entraînement différent du rapport actuel, et, est configurée pour, si la différence entre le second rendement et le premier rendement est supérieure au premier seuil pour au moins l'un des deux rapports d'entraînement, imposer le rapport d'entraînement permettant d'obtenir le second rendement le plus élevé.

9. Procédé de gestion d'un véhicule automobile équipé d'une première batterie (7) connectée à un alternateur (3) et à un réseau électrique du véhicule (2), l'alternateur étant pilotable pour fonctionner soit à une tension basse d'alternateur (Valt_basse) strictement positive, soit à au moins une tension haute d'alternateur (Valt_haute) strictement supérieure à la tension basse d'alternateur, dans lequel on estime l'intensité (I(SOC)) du courant de recharge potentiel que la première batterie (7) serait capable d'absorber si elle était à cet instant alimentée à la tension haute d'alternateur (Valt_haute), le procédé étant **caractérisé en ce que**:
on estime un premier rendement (Rend₁) d'alternateur correspondant au régime de rotation actuel (ω) de l'alternateur (3), et à l'intensité de courant (Iᵣₑₛ) consommé effectivement débité dans le réseau, on estime un second rendement d'alternateur (Rend₂) correspondant au régime de rotation actuel de l'alternateur et à la somme des intensité (I(SOC)+Iᵣₑₛ) du courant de recharge potentiel (I(SOC)) de la première batterie et dudit courant consommé (Iᵣₑₛ), et on impose une tension haute d'alternateur si la différence entre le second rendement et le premier rendement est supérieure à un premier seuil (Δ).

10. Procédé de gestion selon la revendication 9, dans lequel on fait varier le rapport d'entraînement entre le régime de rotation de l'alternateur et le régime de rotation d'un moteur entraînant l'alternateur, de manière à augmenter la différence entre le second rendement et le premier rendement, pour au moins une plage de régimes de rotation du moteur.

## Patentansprüche

1. System (1) für die Versorgung mit elektrischer Energie eines Fahrzeugs, das eine Brennkraftmaschine enthält, die das Fahrzeug antreiben kann, das Folgendes umfasst:
- ein Netz (2) aus wenigstens einem Organ (6), das ein Verbraucher von elektrischer Energie ist,
- eine erste Batterie (7) für die Akkumulation von Elektrizität, die mit dem Netz (2) verbunden ist,
- einen vorsteuerbaren Wechselstromgenerator (3), der mit dem Netz (2) verbunden ist, der durch die Kraftmaschine angetrieben wird und der an das Netz (2) elektrische Energie unterhalb einer Sollspannung liefern kann, die auf wenigstens eine streng positive, niedrige Wechselstromgeneratorspannung (Valt_basse) und auf eine hohe Wechselstromgeneratorspannung (Valt_haute), die streng größer als die niedrige Wechselstromgeneratorspannung ist, vorgesteuert werden kann,
- einen Strommesser (12), der ermöglicht, die aktuelle Stromstärke (Iᵣₑₛ), die von dem elektrischen Netz (2) verbraucht wird, zu messen,
- eine Einrichtung (14) zum Schätzen des Ladezustands der ersten Batterie (7), die ermöglicht, die Stärke (I(SOC)) des potentiellen Wiederaufladestroms, den die erste Batterie absorbieren könnte, wenn sie zu diesem Zeitpunkt mit der hohen Wechselstromgeneratorspannung (Valt_haute) versorgt werden würde, zu schätzen, **dadurch gekennzeichnet, dass** das System außerdem Folgendes umfasst:
- einen Zähler (13) der Drehzahl des Wechselstromgenerators (3),
- eine elektronische Steuereinheit (10), die mit dem Zähler (13), der Ladezustandsschätzeinrichtung (14) und dem Strommesser (12) verbunden ist und mit einem Kennfeld (15) der Leistung des Wechselstromgenerators in Abhängigkeit von der Drehzahl des Wechselstromgenerators und der von dem Wechselstromgenerator gelieferten Stromstärke verbunden ist, wobei die elektronische Steuereinheit (10) konfiguriert ist, eine erste Leistung (Rend₁) des Wechselstromgenerators, die der aktuellen Drehzahl (ω) des Wechselstromgenerators und der in dem Netz (2) gelieferten effektiv verbrauchten Stromstärke (Iᵣₑₛ) entspricht, zu schätzen, eine zweite Leistung (Rend₂) des Wechselstromgenerators, die der aktuellen Drehzahl des Wechselstromgenerators und der Summe (I(SOC) + Iᵣₑₛ) der Stärken des potentiellen Wiederaufladestroms der ersten Batterie (I(SOC)) und des verbrauchten Stroms (Iᵣₑₛ) entspricht, zu schätzen und die hohe Wechselstromgeneratorspannung (Valt_haute) anzulegen, falls die Differenz zwischen der zweiten Leistung und der ersten Leistung größer als ein erster Schwellenwert (Δ) ist.

2. System nach Anspruch 1, wobei die elektronische Steuereinheit (10) konfiguriert ist, das Anlegen einer hohen Wechselstromgeneratorspannung (Valt_haute) zu beenden, falls die Differenz zwischen der zweiten Leistung und der ersten Leistung kleiner als ein zweiter Schwellenwert wird, der kleiner oder gleich dem ersten Schwellenwert ist.

3. System nach Anspruch 1 oder 2, wobei die elektronische Steuereinheit (10) konfiguriert ist, eine niedrige Wechselstromgeneratorspannung (Valt_basse) anzulegen, falls der Ladezustand der ersten Batterie (7) größer als ein dritter Schwellenwert wird oder falls der potentielle Wiederaufladestrom (I(SOC)) kleiner als ein vierter Schwellenwert wird.

4. System nach einem der vorhergehenden Ansprüche, wobei die elektronische Steuereinheit (10) mit einer Schätzeinrichtung (16) für die Leistung der Kraftmaschine verbunden ist und konfiguriert ist, die hohe Wechselstromgeneratorspannung (Valt_haute) ausschließlich dann anzulegen, wenn das Produkt aus der Leistung der Kraftmaschine und der zweiten Leistung größer als ein fünfter Schwellenwert ist.

5. Versorgungssystem nach einem der vorhergehenden Ansprüche, das außerdem eine zweite Batterie (4) für die Akkumulation von Elektrizität umfasst, die mit dem Wechselstromgenerator verbunden ist und einen Anlasser, der die Kraftmaschine des Fahrzeugs starten kann, versorgen kann, wobei die zweite Batterie (4) eine zweite maximale Vakuumspannung (V0max_Batt2) aufweist, die kleiner als eine erste maximale Vakuumspannung der ersten Batterie (V0max_Batt1) ist und die kleiner als die niedrige Wechselstromgeneratorspannung (Valt_basse) ist.

6. System nach Anspruch 5, das eine Rollfolgereinheit (16) umfasst, die mit dem Wechselstromgenerator verbunden ist und verschiedene Rollarten des Fahrzeugs detektieren kann und die konfiguriert ist, die hohe Wechselstromgeneratorspannung (Valt_haute) wenigstens während bestimmter Rollphasen des Fahrzeugs, zu denen Phasen des rekuperativen Bremsens gehören, anzulegen und die niedrige Wechselstromgeneratorspannung (Valt_basse) während anderer Rollphasen, die mehr Kraftstoff als die ersten Rollphasen verbrauchen, anzulegen, es sei denn, dass die elektronische Steuereinheit die hohe Wechselstromgeneratorspannung anlegt.

7. System nach dem vorhergehenden Anspruch, das außerdem einen Regulierer umfasst, der das Antriebsverhältnis zwischen der Drehzahl des Wechselstromgenerators und der Drehzahl der Kraftmaschine verändern kann, wobei die Rollfolgereinheit (16) mit dem Regulierer verbunden ist und konfiguriert ist, wenigstens ein erstes Antriebsverhältnis anzuwenden, falls sie ein Rollen des städtischen Typs detektiert, und wenigstens ein zweites Antriebsverhältnis, das geringer als das vorhergehende ist, anzuwenden, falls sie ein Rollen des Autobahntyps detektiert.

8. System nach einem der Ansprüche 1 bis 6, das einen Regulierer umfasst, der das Antriebsverhältnis zwischen der Drehzahl des Wechselstromgenerators und der Drehzahl der Kraftmaschine verändern kann, wobei die elektronische Steuereinheit (10) mit dem Regulierer verbunden ist und konfiguriert ist, eine erste Leistung und eine zweite Leistung, die der aktuellen Drehzahl des Wechselstromgenerators entsprechen, sowie eine erste und eine zweite Leistung, die einem von dem aktuellen Verhältnis verschiedenen Antriebsverhältnis entsprechen, zu berechnen, und konfiguriert ist, dann, wenn die Differenz zwischen der zweiten Leistung und der ersten Leistung größer als der erste Schwellenwert für wenigstens eines der beiden Antriebsverhältnisse ist, das Antriebsverhältnis, das ermöglicht, die zweite, höhere Leistung zu erhalten, anzuwenden.

9. Verfahren zum Steuern eines Kraftfahrzeugs, das mit einer ersten Batterie (7), die mit einem Wechselstromgenerator (3) und mit einem elektrischen Netz des Fahrzeugs (2) verbunden ist, ausgerüstet ist, wobei der Wechselstromgenerator vorgesteuert werden kann, um entweder mit niedriger Wechselstromgeneratorspannung (Valt_basse), die streng positiv ist, oder mit wenigstens einer hohen Wechselstromgeneratorspannung (Valt_haute), die streng größer als die niedrige Wechselstromgeneratorspannung ist, zu arbeiten, wobei die Stärke (I(SOC)) des potentiellen Wiederaufladestroms, die die erste Batterie (7) absorbieren könnte, wenn sie zu diesem Zeitpunkt mit der hohen Wechselstromgeneratorspannung (Valt_haute) versorgt werden würde, geschätzt wird, wobei das Verfahren **dadurch gekennzeichnet ist, dass**:
eine erste Leistung (Rend₁) des Wechselstromgenerators, der der aktuellen Drehzahl (ω) des Wechselstromgenerators (3) und der Stärke des Stroms (Iᵣₑₛ), der in dem Netz geliefert wird und effektiv verbraucht wird, geschätzt wird, eine zweite Wechselstromgeneratorleistung (Rend₂), die der aktuellen Drehzahl des Wechselstromgenerators und der Summe aus der Stärke (I(SOC) + Iᵣₑₛ) des potentiellen Wiederaufladestroms (I(SOC)) der ersten Batterie und aus dem verbrauchten Strom (Iᵣₑₛ) entspricht, geschätzt wird und eine hohe Wechselstromgeneratorspannung angelegt wird, falls die Differenz zwischen der zweiten Leistung und der ersten Leistung größer als ein erster Schwellenwert (Δ) ist.

10. Steuerverfahren nach Anspruch 9, wobei das Antriebsverhältnis zwischen der Drehzahl des Wechselstromgenerators und der Drehzahl einer dem Wechselstromgenerator antreibenden Kraftmaschine in der Weise verändert wird, dass die Differenz zwischen der zweiten Leistung und der ersten Leistung wenigstens für einen Drehzahlbereich der Kraftmaschine vergrößert wird.

## Claims

1. Electric power supply system (1) for a vehicle including a heat engine able to propel the vehicle, comprising:
- a network (2) of at least one electricity consuming member (6),
- a first electric accumulator battery (7) connected to the network (2),
- a controllable alternator (3) connected to the network (2), driven by the engine, and able to deliver electric power to the network (2) at a setpoint voltage controllable to at least a strictly positive low alternator voltage (Valt_basse), and to a high alternator voltage (Valt_haute) strictly higher than the low alternator voltage,
- an ammeter (12) making it possible to measure the instantaneous intensity (Iᵣₑₛ) consumed by the power network (2),
- an estimator of the state of charge (14) of the first battery (7) making it possible to estimate the intensity (I(SOC)) of the potential recharging current that the first battery would be capable of absorbing if it was at that instant powered at the high alternator voltage (Valt_haute), **characterized in that** the system also comprises:
- a meter (13) of the speed of rotation of the alternator (3),
- an electronic control unit (10) linked to the meter (13), to the state of charge estimator (14) and to the ammeter (12), and linked to a map (15) of the alternator yield as a function of the alternator speed and of the intensity output by the alternator, the electronic control unit (10) being configured to estimate a first alternator yield (Rend₁) corresponding to the current speed of rotation (ω) of the alternator, and to the intensity of current (Iᵣₑₛ) consumed actually drawn from the network (2), to estimate a second alternator yield (Rend₂) corresponding to the current speed of rotation of the alternator and to the sum (I(SOC)+Iᵣₑₛ) of the intensities of the potential recharging current of the first battery (I(SOC)) and of said current consumed (Iᵣₑₛ), and to impose the high alternator voltage (Valt_haute) if the difference between the second yield and the first yield is higher than a first threshold (Δ).

2. System according to Claim 1, wherein the electronic control unit (10) is configured to stop imposing a high alternator voltage (Valt_haute) if the difference between the second yield and the first yield again becomes lower than a second threshold lower than or equal to the first threshold.

3. System according to Claim 1 or 2, wherein the electronic control unit (10) is configured to impose a low alternator voltage (Valt_basse) if the state of charge of the first battery (7) becomes higher than a third threshold or if the potential recharging current (I(SOC)) becomes lower than a fourth threshold.

4. System according to any one of the preceding claims, wherein the electronic control unit (10) is linked to an estimator of the engine yield (16), and is configured to impose the high alternator voltage (Valt haute) only if the product of the engine yield and the second yield is higher than a fifth threshold.

5. Power supply system according to any one of the preceding claims, furthermore comprising a second electric accumulator battery (4) connected to the alternator and able to power a starter able to launch the engine of the vehicle, the second battery (4) having a second maximum no-load voltage (V0max_Batt2) that is lower than a first maximum no-load voltage of the first battery (V0max_Batt1), and which is lower than the low alternator voltage (Valt_basse).

6. System according to Claim 5, comprising a driving monitoring unit (16) linked to the alternator, able to detect various types of driving of the vehicle, which is configured to impose the high alternator voltage (Valt_haute) during at least certain phases of driving of the vehicle including phases of regenerative braking, and to impose the low alternator voltage (Valt_basse) during other phases of driving that consume more fuel than the first driving phases, unless the electronic control unit imposes the high alternator voltage.

7. System according to the preceding claim, furthermore comprising a regulator able to vary the drive ratio between the speed of rotation of the alternator and the speed of rotation of the engine, the driving monitoring unit (16) being linked to the regulator and being configured to impose at least a first drive ratio if it detects driving of city type, and to impose at least a second drive ratio lower than the previous one, if it detects driving of highway type.

8. System according to any one of Claims 1 to 6, comprising a regulator able to vary the drive ratio between the speed of rotation of the alternator and the speed of rotation of the engine, the electronic control unit (10) being linked to the regulator and being configured to compute a first yield and a second yield corresponding to the current speed of the alternator, as well as a first and a second yield corresponding to a different drive ratio from the current ratio, and is configured so that, if the difference between the second yield and the first yield is higher than the first threshold for at least one of the two drive ratios, the control unit imposes the drive ratio making it possible to obtain the highest second yield.

9. Method for managing a motor vehicle equipped with a first battery (7) connected to an alternator (3) and to a power network (2) of the vehicle, the alternator being controllable to operate either at a strictly positive low alternator voltage (Valt_basse), or at least at a high alternator voltage (Valt_haute) strictly higher than the low alternator voltage, wherein the intensity (I(SOC)) of the potential recharging current that the first battery (7) would be capable of absorbing if it was at that instant powered at the high alternator voltage (Valt_haute) is estimated, the method being **characterized in that** a first alternator yield (Rend₁) is estimated corresponding to the current speed of rotation (ω) of the alternator (3), and to the intensity of the effectively consumed current (Iᵣₑₛ) output in the network, a second alternator yield (Rend₂) is estimated corresponding to the current speed of rotation of the alternator and to the sum of the intensities (I(SOC)+Iᵣₑₛ) of the potential recharging current (I(SOC)) of the first battery and of said current consumed (Iᵣₑₛ), and a high alternator voltage is imposed if the difference between the second yield and the first yield is higher than a first threshold (Δ).

10. Management method according to Claim 9, wherein the drive ratio is varied between the speed of rotation of the alternator and the speed of rotation of an engine driving the alternator, so as to increase the difference between the second yield and the first yield, for at least a range of speeds of rotation of the engine.
